# EUROPÄISCHE PATENTANMELDUNG

(11) **EP 0 705 869 A1**
(43) Veröffentlichungstag der Anmeldung: **10.04.1996**
(21) Anmeldenummer: 95112280.3
(22) Anmeldetag: 04.08.1995
(51) Int. Cl.: C08K 3/32, C08K 3/00, C08K 3/22, C08L 63/00

(54) **Flammwidrige Epoxidharz-Formmassen**

(30) Priorität: 06.09.1994 DE 4431688
(71) Anmelder: HOECHST AKTIENGESELLSCHAFT, D-65926 Frankfurt am Main (DE)
(72) Erfinder: Bielfeldt, Tim, Dr., D-50999 Köln (DE); Staendeke, Horst, Dr., D-53797 Lohmar (DE)

(57) **Zusammenfassung**

Die Erfindung betrifft flammwidrige Epoxidharz-Formmassen, die als Flammschutzsystem eine Phosphor-Stickstoff-Komponente insbesondere Ammoniumpolyphosphat, und gegebenenfalls Aluminiumhydroxid enthalten.

## Beschreibung

Die Erfindung betrifft flammwidrige Epoxidharz-Formmassen, die als Flammschutzsystem eine Phosphor-Stickstoff-Komponente und gegebenenfalls Aluminiumhydroxid enthalten.

Es ist bekannt, daß sich mit einer Kombination aus Ammoniumpolyphosphat und Aluminiumhydroxid eine Reihe von Kunststoffen flammwidrig einstellen läßt. So beschreibt die EP-A-0 305 745 flammwidrige polymere Massen, insbesondere ungesättigte Polyesterharze, die ein solches Flammschutzsystem enthalten. In der DE-OS-20 50 130 werden Flammschutzmittel enthaltende Polyepoxid-Hartschäume beschrieben, wobei das Flammschutzmittel Ammoniumpolyphosphat, Polyvinylchlorid oder roter Phosphor ist.

Letztendlich beschreibt die US-A-4,137,178 die Verwendung von mit Kieselgur modifiziertem Ammoniumpolyphosphat als Flammschutzmittel für Epoxidharze.

Wirtschaftlich und anwendungstechnisch von besonderem Interesse sind flammwidrig eingestellte Epoxidharz-Formmassen, da sie in einer Vielzahl von Anwendungen Vorteile aufweisen.

Ziel der Erfindung ist daher die Herstellung von flammwidrigen Epoxidharz-Formmassen.

Diese Aufgabe wurde dadurch gelöst, daß das Epoxidharz mit den Flammschutzmitteln gemischt wird und anschließend der notwendige Härter hinzugefügt wird. Überraschenderweise erreichen solche flammwidrig eingestellten Epoxidharz-Formmassen gemäß der Klassifizierung des Brandverhaltens nach UL 94 die Einstufung V-0.

Gegenstand der Erfindung sind daher flammwidrige Epoxidharz-Formmassen, die als Flammschutzsystem eine Phosphor-Stickstoff-Komponente und gegebenenfalls Aluminiumhydroxid enthalten.

Überraschenderweise wurde gefunden, daß - im Gegensatz zu ungesättigten Polyesterharzen - für die flammwidrige Einstellung der Epoxidharz-Formmassen nur geringe Mengen an Ammoniumpolyphosphat und Aluminiumhydroxid notwendig sind. Durch einen erhöhten Einsatz von Aluminiumhydroxid läßt sich die Menge an Ammoniumpolyphosphat so stark reduzieren, daß gegenüber der alleinigen Verwendung von Ammoniumpolyphosphat ein kostengünstigeres Flammschutzmittel erhalten wird.

Bevorzugt enthalten die flammwidrigen Epoxidharz-Formmassen als Phosphor-Stickstoff-Komponente mehr als 15, vorzugsweise etwa 20 Masseteile Ammoniumpolyphosphat je 100 Masseteile Epoxidharz-Formmassen.

In einer weiteren Ausgestaltungsform der Erfindung enthalten die flammwidrigen Epoxidharz-Formmassen 5 bis 10 Masseteile Ammoniumpolyphosphat und 50 bis 100 Masseteile Aluminiumhydroxid je 100 Masseteile Epoxidharz-Formmassen.

Das Ammoniumpolyphosphat kann 0,5 bis 25 Masse% eines wasserunlöslichen, gegebenenfalls gehärteten Kunstharzes, welches die einzelnen Ammoniumpolyphosphatteilchen umhüllt, enthalten.

Bevorzugt sind die flammwidrig eingestellten Epoxidharz-Formmassen durch Glasfasern verstärkt. Dies führt zu einer erhöhten mechanischen Festigkeit.

Unter den obengenannten Epoxidharz-Formmassen sollen die Verbindungen verstanden werden, die durch Polyadditionsreaktion aus einer Epoxidharz-Komponente und einer Vernetzungs-(Härter)-Komponente hergestellt werden können. Im allgemeinen werden diese Epoxidharz-Formmassen als gehärtete Epoxidharze bezeichnet. Die Epoxidharze kann man im wesentlichen in die Gruppe der epoxidierten olefinischen Produkte und die Gruppe der Glycidylether einteilen. Neben den Glycidylethern auf Basis von aliphatischen Polyalkoholen oder Novolaken sind die Glycidylether, die sich vom 2,2-Bis(4-hydroxyphenyl)propan (Bisphenol A) ableiten, die wichtigste und am stärksten verbreitete Gruppe. Sie werden durch Umsetzung von Bisphenol A mit Epichlorhydrin hergestellt, wobei man durch Variation des Molverhältnisses zu niedrig- oder hochviskosen Produkten gelangt. Höhermolekulare Verbindungen werden auch durch Umsetzung des 2,2-Bis[4-(2,3-propoxy)phenyl]propan (DGEBA) mit Bisphenol A gezielt erhalten.

Als Härter finden Polyamine wie z.B. Diethylentriamin oder Triethylentetramin, Polyamidoamine, mehrbasige Säuren bzw. deren Anhydride wie z.B. Phthalsäureanhydrid oder Phenole Verwendung. Die Vernetzung kann auch durch Polymerisation unter Verwendung geeigneter Katalysatoren erfolgen. Man unterscheidet weiterhin kalt- und heißhärtende Systeme [Ullmann's encyclopedia of industrial chemistry, Bd. A9, S. 547-563, VCH Verlagsgesellschaft mbH, Weinheim (1987); Kunststoff-Handbuch, Bd. 10 Duroplaste, S. 103-123, Carl Hanser Verlag, München Wien (1988)].

### Beispiele 1 - 14

In den Beispielen wurden die folgenden Produkte eingesetzt:

### ® Hostaflam AP 422 (Hoechst AG, Frankfurt/Main)

- Es handelt sich um ein freifließendes, pulverförmiges, in Wasser schwer lösliches Ammoniumpolyphosphat der Formel (NH₄PO₃)ₙ mit n = 20 bis 1000, insbesondere 500 bis 1000. Der Anteil der Teilchen mit einer Teilchengröße kleiner 45 µm beträgt mehr als 99 %.

### ® Hostaflam AP 462 (Hoechst AG, Frankfurt/Main)

- Es handelt sich um ein mikroverkapseltes Ammoniumpolyphosphat auf Basis von Hostaflam AP 422, das nach dem Verfahren der EP-B-0 180 795 hergestellt wurde und etwa 10 Masse% Kapselmaterial, bestehend aus einem gehärteten Melamin/Formaldehyd-Harz, enthält.

### ® Apyral 2 (VAW Vereinigte Aluminium Werke AG, Bonn)

- Es handelt sich um einen Aluminiumhydroxid-Typ, der aus dem BAYER-Prozeß stammt und nach einem speziellen Verfahren modifiziert wurde (EP 0 011 667).

### ® Beckopox EP 140 (Hoechst AG, Frankfurt/Main)

- Es handelt sich um ein niedrigmolekulares Kondensationsprodukt aus Bisphenol A und Epichlorhydrin mit einer Dichte von 1,16 g/ml (bei 25 °C) und einem Epoxid-Äquivalentgewicht von 180 bis 192.

### ® Beckopox-Spezialhärter EH 614 (Hoechst AG, Frankfurt/Main)

- Es handelt sich um ein modifiziertes aliphatisches Polyamin mit einem H-aktiven Äquivalentgewicht von 70 und einer dynamischen Viskosität von 3000 bis 4500 mPa.s (bei 25 °C).

Herstellung des Epoxid-Harz/Härter/Flammschutzmittel-Gemisches und der Prüfplatte

### Bei Raumtemperatur wurden zunächst

- 100 g: ® Beckopox EP 140
- 17.5 g: ® Hostaflam AP 422
- 50 g: ® Apyral 2
und anschließend
- 29.2 g: ® Beckopox-Spezialhärter EH 614
vermischt. Diese Gießharzmasse wurde in einen geeigneten Rahmen gegossen und in einer Presse kalt ausgehärtet. Anschließend wurde die so hergestellte 1.6 mm dicke Platte in Streifen gesägt und diese Prüfkörper den Brandtests unterzogen.

### Brandprüfungen

Die Prüfung des Brandverhaltens wurde nach der Vorschrift von Underwriters Laboratories "Test for Flammability of Plastic Material - UL 94" in der Fassung vom 02.05.1975 an Prüfkörpern von 127 mm Länge, 12.7 mm Breite und 1.6 mm Dicke vorgenommen.
Der Sauerstoffindex wurde in einer Apparatur gemäß ASTM-D 2863-74 bestimmt.

Die Beispiele 1 bis 8 sind Vergleichsbeispiele. Sie zeigen an, daß weder die alleinige Verwendung von Apyral 2, auch in größeren Mengen (Beispiele 1 bis 3), noch die alleinige Verwendung von Hostaflam AP 422 bzw. AP 462 (Beispiele 4 bis 8) in Mengen bis 15 Teile auf 100 Teile Beckopox EP 140, zur Einstufung in die Klassen UL 94-V0, V1 oder V2 ausreichen, obwohl hohe Werte beim Sauerstoff-Index erreicht werden.

Dagegen zeigen die erfindungsgemäßen Beispiele 9 bis 11, daß ein wirksamer Flammschutz mit der alleinigen Verwendung von Hostaflam AP 422 bzw. AP 462 erreicht werden kann, wenn mehr als 15 Teile Hostaflam (zu 100 Teilen Epoxid) verwendet werden. Die Beispiele 12 bis 14 zeigen, daß sich bei zusätzlicher Verwendung von Apyral 2 der Hostaflam-Anteil wesentlich reduzieren läßt, ohne daß sich das Brandverhalten verschlechtert.

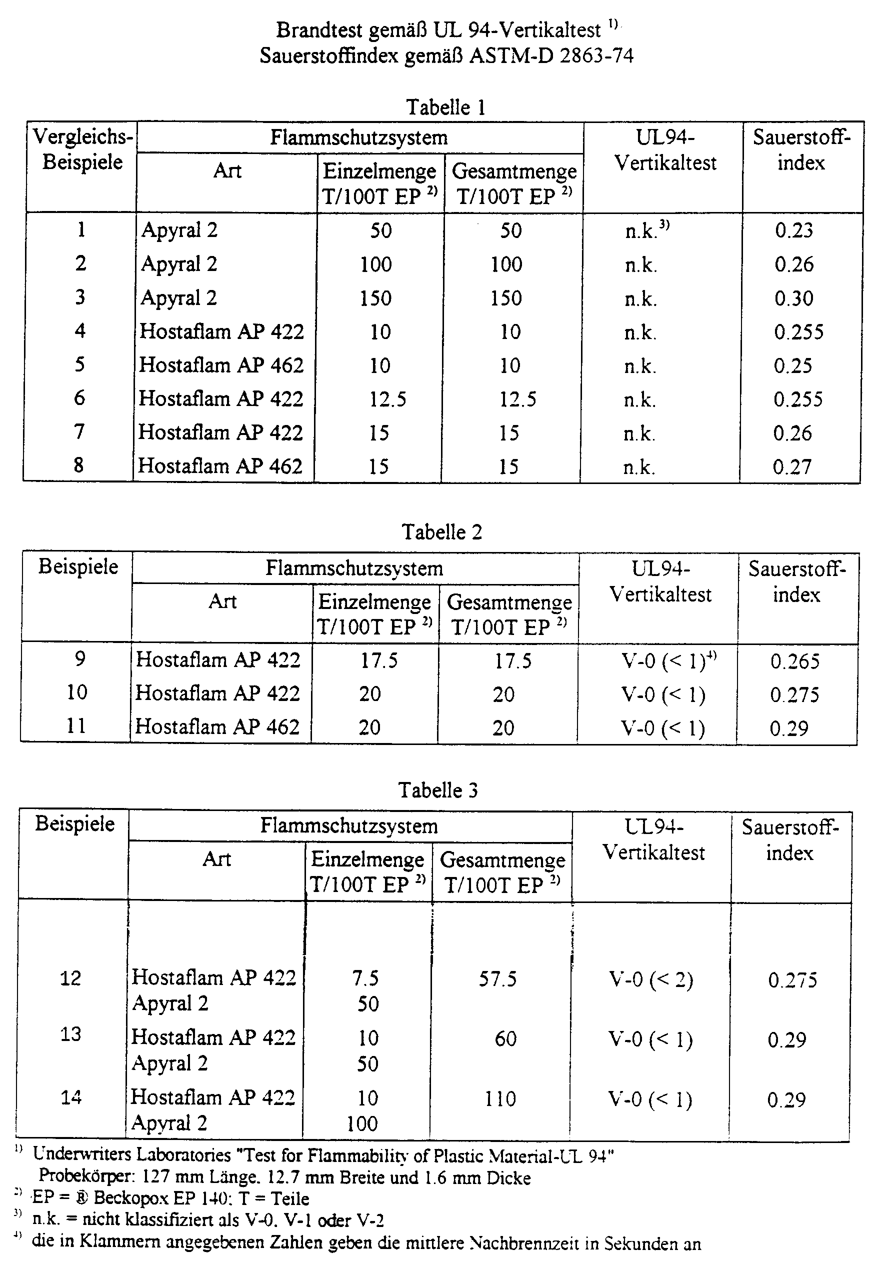

## Patentansprüche

1. Flammwidrige Epoxidharz-Formmassen, die als Flammschutzsystem eine Phosphor-Stickstoff-Komponente und gegebenenfalls Aluminiumhydroxid enthalten.

2. Flammwidrige Epoxidharz-Formmassen nach Anspruch 1, dadurch gekennzeichnet, daß sie als Phosphor-Stickstoff-Komponente mehr als 15, vorzugsweise etwa 20 Masseteile Ammoniumpolyphosphat je 100 Masseteile Epoxidharz-Formmassen enthalten.

3. Flammwidrige Epoxidharz-Formmassen nach Anspruch 1, dadurch gekennzeichnet, daß sie 5 bis 10 Masseteile Ammoniumpolyphosphat und 50 bis 100 Masseteile Aluminiumhydroxid je 100 Masseteile Epoxidharz-Formmassen enthalten.

4. Flammwidrige Epoxidharz-Formmassen nach einem der vorhergehenden Ansprüche, dadurch gekennzeichnet, daß sie durch Glasfasern verstärkt sind.
